# EUROPEAN PATENT APPLICATION

(11) **EP 3 587 372 A1**
(43) Date of publication of application: **01.01.2020**
(21) Application number: 18756732.6
(22) Date of filing: 22.02.2018
(51) Int. Cl.: C03C 27/12, B32B 5/18, B32B 17/10, B32B 27/42, B60J 1/00

(54) **ANISOTROPIC EXOTHERMIC SHEET, INTERMEDIATE FILM FOR LAMINATED GLASS, AND LAMINATED GLASS**

(30) Priority: 22.02.2017 JP 2017031098
(71) Applicant: Sekisui Chemical Co., Ltd., Osaka-shi, Osaka 530-0047 (JP)
(72) Inventor: YOSHIDA, Shougo, Koka-shi Shiga 528-8585 (JP); TAKAHASHI, Katsunori, Koka-shi Shiga 528-8585 (JP); OKANO, Moyuru, Koka-shi Shiga 528-8585 (JP); YAMAMOTO, Masaki, Koka-shi Shiga 528-8585 (JP)
(74) Representative: Cabinet Beau de Loménie
(86) International application number: PCT/JP2018/006430
(87) International publication number: WO 2018/155550

(57) **Abstract**

The present invention aims to provide an anisotropic heating sheet which is capable of emitting generated heat in a specific direction to efficiently utilize its energy, and which has excellent handleability. The present invention also aims to provide an interlayer film for a laminated glass and a laminated glass each including the anisotropic heating sheet. Provided is an anisotropic heating sheet including: a laminate including an aerogel layer containing an aerogel and a heating layer, the aerogel layer having a tensile strain at break of 0.1% or higher as determined by a tensile test in conformity with JIS C 2151.

## Description

### TECHNICAL FIELD

The present invention relates to an anisotropic heating sheet which is capable of emitting generated heat in a specific direction to efficiently utilize its energy, and which has excellent handleability. The present invention also relates to an interlayer film for a laminated glass and a laminated glass each including the anisotropic heating sheet.

### BACKGROUND ART

Laminated glass is less likely to scatter even when fractured by external impact and can be safely used. Due to this advantage, laminated glass has been widely used for vehicles, buildings, or the like.

In recent years, laminated glass is desired to have various properties. A study is now made on a technique of heating the laminated glass itself, used for a windowpane, to warm the frozen windowpane to melt frost or ice thereon.

As one technique of heating the laminated glass itself, a method of forming a conductive film on a glass surface of the laminated glass to warm the laminated glass by heat derived from resistance upon energization is studied. Such a laminated glass including a conductive film formed thereon is disclosed in, for example, Patent Literature 1.

As a method of heating the laminated glass itself, a method of stacking a heating layer including a conductive film in an interlayer film for a laminated glass is also studied. Such an interlayer film for a laminated glass is typically produced by a method of stacking a resin layer containing a thermoplastic resin such as a polyvinyl acetal on a heating layer.

However, when warming a frozen windowpane using such a laminated glass capable of generating heat to melt frost or ice, it takes more than a certain amount of time before the frost or ice has actually melted. There is thus a demand for efficient melting of frost or ice in a shorter time.

### CITATION LIST

### - Patent Literature

Patent Literature 1: JP 2008-222513 A

### SUMMARY OF INVENTION

### - Technical problem

The present inventors studied the reason why even the laminated glass capable of generating heat fails to efficiently warm a frozen windowpane in a short time and melt frost or ice. As a result, they found out that heat generated from the laminated glass is inefficiently used because the heat is emitted to both sides of the laminated glass. Specifically, in automobiles, buildings, and the like, frost or ice is on the outside. While substantially half the energy of heat generated from the laminated glass is emitted outward and used to melt the frost or ice, the other substantially half the energy is emitted inward without being used to melt frost or ice.

In view of the situation of the art, the present inventors aim to provide an anisotropic heating sheet which is capable of emitting generated heat in a specific direction to efficiently utilize its energy, and which has excellent handleability. The present inventors also aim to provide an interlayer film for a laminated glass and a laminated glass each including the anisotropic heating sheet.

### - Solution to problem

The present invention relates to an anisotropic heating sheet including: a laminate including an aerogel layer containing an aerogel and a heating layer, the aerogel layer having a tensile strain at break of 0.1% or higher as determined by a tensile test in conformity with JIS C 2151.

The present invention is described in detail below.

Aerogel is a porous material obtained by replacing the solvent contained in a gel with a gas by super supercritical drying, evaporation drying, freeze-drying, or the like. In recent years, silica aerogel and other various aerogels, such as carbon aerogel and polymer aerogel, have been known. The present inventors made intensive studies to find out that stacking a heating layer on an aerogel layer containing an aerogel enables production of an anisotropic heating sheet capable of emitting generated heat in a specific direction to efficiently utilize its energy. The anisotropic heating sheet can exhibit very high anisotropic heating properties especially when a laminated glass is produced using the anisotropic heating sheet as an interlayer film for a laminated glass. This is presumably attributed to the following reasons: in production of a laminated glass using the anisotropic heating sheet of the present invention as an interlayer film for a laminated glass, the high-temperature, high-pressure conditions in an autoclave step allow more solvent in the aerogel than usual to evaporate, resulting in an aerogel having more voids; and the aerogel, as used in a laminated glass, is less likely to absorb moisture, so that the aerogel can maintain the state with more voids to be particularly less likely to conduct heat, thus improving heat insulation properties. When the aerogel alone is put under high-temperature, high-pressure conditions as in an autoclave, it is very difficult to perform the same treatment as in production of a laminated glass because leaving the aerogel to stand is difficult due to its lightness.

For use of the anisotropic heating sheet as an interlayer film for a laminated glass, shock resistance, handleability, and the like are also important. Many aerogels have low shock resistance and are fragile. Aerogels thus cause a new problem that they cannot be bent along a curved surface, nor wound into a roll to improve the handleability. As a result of further studies, the present inventors found that increasing the flexibility of the entire anisotropic heating sheet by selecting an aerogel having a particularly high flexibility can impart shock resistance and handleability so that the anisotropic heating sheet can be used as an interlayer film for a laminated glass while exhibiting high anisotropic heating properties. They thus completed the present invention.

The anisotropic heating sheet of the present invention includes a laminate including an aerogel layer and a heating layer.

The aerogel layer contains an aerogel and thus can exhibit high heat insulation properties. The aerogel layer blocks heat generated in the heating layer from being emitted to the aerogel layer side, causing the heat to be emitted to the side opposite to the aerogel layer. Thus, the anisotropic heating sheet can exhibit high anisotropic heating properties. Especially when a laminated glass is produced using the anisotropic heating sheet as an interlayer film for a laminated glass, the anisotropic heating sheet of the present invention can exhibit higher anisotropic heating properties.

The aerogel is a porous material obtained by replacing the solvent contained in a gel with a gas by super supercritical drying, evaporation drying, freeze-drying, or the like.

The aerogel is not particularly limited. For example, the aerogel may be a conventionally known aerogel such as a polymer aerogel, a silica aerogel, a carbon aerogel, an alumina aerogel, or an organic-inorganic hybrid aerogel. In particular, the aerogel is suitably a polymer aerogel because it has high flexibility that makes it possible to achieve the tensile strain at break described later.

The polymer aerogel is an aerogel produced by preparing a gel containing an organic polymer material and then removing the solvent by supercritical drying, evaporation drying, freeze-drying, or the like.

The organic polymer material constituting the polymer aerogel is not particularly limited. For achieving an aerogel having a particularly high flexibility, the organic polymer is suitably at least one organic polymer material selected from the group consisting of resorcinol-formalin resins, cellulose nanofibers, polyimides, polyurethanes, epoxy resins, polyacrylates, acrylate oligomers, polymethylmethacrylates, polyoxyalkylenes, polybutadienes, polyethers, and chitosans.

The organic-inorganic hybrid aerogel is an aerogel constituted by organic matter and inorganic matter.

The silica aerogels and alumina aerogels are classified as inorganic aerogels, but some of them are classified as organic-inorganic hybrid aerogels. For example, silica aerogels as inorganic aerogels do not contain an organic group between two Si atoms. In contrast, silica aerogels as organic-inorganic hybrid aerogels contain an organic group between two Si atoms. From the viewpoint of obtaining an aerogel exhibiting high flexibility, silica aerogels as organic-inorganic hybrid aerogels are suitable. Whether the silica aerogel is an inorganic silica aerogel or an organic-inorganic hybrid silica aerogel can be determined by NMR analysis, for example.

The aerogel layer may contain, in addition to the aerogel, additives such as an antioxidant, an ultraviolet absorber, a light stabilizer, a flame retardant, a dye, a pigment, a plasticizer, an antistatic agent, inorganic particles, a fluorescent agent, a heat-ray absorbent, a heat-ray reflecting agent, modified silicone oil as an adhesion modifier, a moisture-proof agent, and an anti-blocking agent. The aerogel layer may be coated with a thermosetting material.

Here, to further improve the anisotropic heating properties and the transparency, the aerogel layer preferably consists only of an aerogel or has an aerogel content of 80% by weight or more.

The thickness of the aerogel layer is not particularly limited. The lower limit thereof is preferably 10 µm and the upper limit thereof is preferably 30 mm. The aerogel layer having a thickness of 10 µm or more can exhibit heat insulation properties high enough to impart high anisotropic heating properties. The aerogel layer having a thickness of 30 mm or less improves the handleability in bending processing along a curved surface or in winding into a roll. The lower limit of the thickness of the aerogel layer is more preferably 50 µm and the upper limit thereof is more preferably 15 mm. The lower limit is still more preferably 90 µm and the upper limit is still more preferably 3 mm. The upper limit is particularly preferably 1.5 mm, most preferably 800 µm.

In particular, when the thickness of the aerogel layer is 3 mm or less, not only the handleability is simply improved, but also the effect of preventing aerogel breakage is further enhanced. In addition, the formation of wrinkles or fold marks in the aerogel layer can be further suppressed. As the thickness of the aerogel layer is reduced to 2.0 mm or less, 1.5 mm or less, 800 µm or less, and 500 µm or less, the effect of preventing aerogel breakage and the effect of preventing wrinkles or fold marks are increased.

The heating layer generates heat under application of a voltage to serve functions such as warming frozen glass and melting frost or ice.

The heating layer preferably has a surface resistivity of 10 Ω/□ or lower. The heating layer having a surface resistivity of 10 Ω/□ or lower can sufficiently generate heat under application of a voltage and warm frozen glass to melt frost or ice. The surface resistivity is more preferably 5.0 Ω/□ or lower, still more preferably 3.5 Ω/□ or lower, particularly preferably 2.5 Ω/□ or lower.

The heating layer has a single-layer or multilayer structure constituted by a metal having a low electrical resistivity such as gold, silver, copper, or platinum. The heating layer constituted by such a metal having a low electrical resistivity can sufficiently generate heat under application of a voltage.

The metal having a low electrical resistivity as used herein refers to a metal or alloy having an electrical resistivity of 1 × 10⁻⁶ Ωm or lower. Examples of the metal or alloy having an electrical resistivity of 1 × 10⁻⁷ Ωm or higher but lower than 1 × 10⁻⁶ Ωm include platinum, iron, tin, chromium, lead, titanium, mercury, and stainless steel. Examples of the metal or alloy having an electrical resistivity of lower than 1 × 10⁻⁷ Ωm include gold, silver, copper, aluminum, magnesium, tungsten, cobalt, zinc, nickel, potassium, lithium, and brass.

The thickness of the heating layer is not particularly limited. The thickness of the heating layer is preferably 10 nm or more. The heating layer having a thickness of 10 nm or more can sufficiently generate heat under application of a voltage and warm frozen glass or melt frost or ice. The thickness of the heating layer is preferably 15 nm or more, more preferably 20 nm or more.

The upper limit of the thickness of the heating layer is not particularly limited, but about 1,000 nm is substantially the upper limit.

The heating layer may have a transparent conductive layer or a metal oxide layer stacked on at least one surface. Use of the transparent conductive layer or the metal oxide layer can increase the transparency of the resulting anisotropic heating sheet.

The transparent conductive layer preferably contains, for example, for transparency and low electric resistivity, tin-doped indium oxide (ITO), fluorine-doped tin oxide (FTO), or antimony-doped tin oxide (ATO).

The metal oxide layer may contain, for example, titanium oxide (TiO₂), niobium oxide (Nb₂O₅), or silicon oxide (SiO₂).

These transparent conductive layers and metal oxide layers may be used alone or used in combination of two or more thereof. Suitably among them are a transparent conductive layer containing ITO or ATO and a metal oxide layer containing at least one selected from the group consisting of titanium oxide and niobium oxide.

The thickness of each of the transparent conductive layer and the metal oxide layer is not particularly limited. The lower limit thereof is preferably 20 nm and the upper limit thereof is preferably 300 nm. The lower limit of the thickness of each of the transparent conductive layer and the metal oxide layer is more preferably 25 nm and the upper limit thereof is more preferably 100 nm.

The heating layer may be formed directly on the aerogel layer, or may be formed on a substrate and then stacked on the aerogel layer.

In the case where the anisotropic heating sheet of the prevent invention includes a substrate, the substrate preferably has a thermal shrinkage measured in conformity with JIS C 2151 of 1.0% to 3.5% in both of MD and TD directions after heat treatment at 150°C for 30 minutes. The use of a substrate having such a thermal shrinkage enables formation of a uniform heating layer by a sputtering process or the like and also prevents misalignment between the heating layer and the resin layer described later during the production of a laminated glass due to a difference in the thermal shrinkage, thereby improving the adhesiveness between the heating layer and the resin layer. The lower limit of the thermal shrinkage is more preferably 1.5% and the upper limit thereof is more preferably 3.0%.

The MD direction (machine direction) as used herein refers to an extrusion direction in the extrusion processing of a substrate into a sheet. The TD direction (transverse direction) refers to a direction perpendicular to the MD direction.

The thermal shrinkage corresponds to the dimensional change ratio specified in the section "21. Dimensional Change" in JIS C 2151:2006.

The substrate preferably has a Young's modulus of 1 MPa or more. The use of a substrate having a Young's modulus of 1 MPa or more improves the adhesiveness between the substrate and the resin layer. The Young's modulus of the substrate is more preferably 10 MPa or more, still more preferably 20 MPa or more. The upper limit of the Young's modulus of the substrate is preferably 10 GPa.

The Young's modulus is indicated by a gradient of a straight part of a stress-strain curve obtained by a tensile test in conformity with JIS K7127 at 23°C.

Commonly, the resin layer described later preferably has a Young's modulus of less than 1 GPa.

The substrate preferably contains a thermoplastic resin.

Examples of the thermoplastic resin contained in the substrate include chain polyolefins (e.g., polyethylene, polypropylene, poly(4-methylpentene-1), and polyacetal) and alicyclic polyolefins (e.g., ring-opening metathesis polymers or addition polymers of norbornenes and addition copolymers of norbornenes and other olefins). Examples also include biodegradable polymers (e.g., polylactic acid and polybutylsuccinate). Examples also include polyamides (e.g., nylon 6, nylon 11, nylon 12, and nylon 66) and aramids. Examples also include polyesters (e.g., polymethyl methacrylate, polyvinyl chloride, polyvinylidene chloride, polystyrene, styrene-copolymerized polymethyl methacrylate, polycarbonate, polypropylene terephthalate, polyethylene terephthalate, polyethylene naphthalate, polybutylene terephthalate, and polyethylene-2,6-naphthalate). Examples also include polyethersulfone, polyether ether ketone, modified polyphenylene ethers, polyphenylene sulfide, polyetherimide, polyimides, and polyarylates. Examples also include tetrafluoroethylene resins, trifluoroethylene resins, polychlorotrifluoroethylene resins, tetrafluoroethylene-hexafluoropropylene copolymers, and polyvinylidene fluoride. Each of these thermoplastic resins is used alone or in combination of two or more thereof to adjust the thermal shrinkage and Young's modulus each within a predetermined range.

The substrate may contain conventionally known additives such as a UV blocking agent or an antioxidant as needed.

The UV blocking agent used may be a conventionally known UV blocking agent such as a metal-containing UV blocking agent or a metal oxide-containing UV blocking agent. Examples of the UV blocking agent also include a UV blocking agent having a benzotriazole structure, a UV blocking agent having a benzophenone structure, a UV blocking agent having a triazine structure, a UV blocking agent having a malonic acid ester structure, a UV blocking agent having an oxanilide structure, and a UV blocking agent having a benzoate structure.

The antioxidant used may be a conventionally known antioxidant such as an antioxidant having a phenol structure, a sulfur-containing antioxidant, and a phosphor-containing antioxidant.

The thickness of the substrate is not particularly limited. The lower limit thereof is preferably 10 µm and the upper limit thereof is preferably 500 µm. The thickness of the substrate within this range allows formation of a uniform heating layer by a sputtering process or the like and prevents misalignment between the heating layer and the surface of the resin layer during production of a laminated glass to further enhance the adhesiveness between the heating layer and the resin layer. The lower limit of the thickness of the substrate is more preferably 20 µm and the upper limit thereof is more preferably 300 µm.

The heating layer may be formed on the aerogel layer or the substrate by any method, and a conventionally known method such as a sputtering process, ion plating, a plasma CVD process, a vapor deposition process, an application process, or a dipping process may be employed. In particular, a sputtering process is preferred because a uniform heating layer can be formed.

In the case where the heating layer is formed on a substrate, the resin layer that directly contacts the substrate and the substrate preferably have a difference in the thermal shrinkage measured in conformity with JIS C 2151 of 10% or less in absolute value in both of MD and TD directions after heat treatment at 150°C for 30 minutes. With the difference in the thermal shrinkage between the resin layer that directly contacts the substrate and the substrate of 10% or less in absolute value, misalignment between the resin layer and the heating layer during the production of a laminated glass is prevented, so that the adhesiveness between the heating layer and the resin layer can be further enhanced. The difference in the thermal shrinkage between the resin layer and the substrate is more preferably 8% or less in absolute value.

The thermal shrinkage of the resin layer can be adjusted not only by the type of the thermoplastic resin constituting the resin layer and the type or amount of the plasticizer but also by the conditions for annealing treatment.

The interlayer film for a laminated glass of the present invention may include a resin layer containing a thermoplastic resin on one or both surfaces of the laminate (hereinafter, when the resin layers are provided on both surfaces, one of them may also be referred to as a "first resin layer" and the other may also be referred to as a "second resin layer"). The anisotropic heating sheet including the resin layer, when used as, for example, an interlayer film for a laminated glass, improves adhesiveness to glass and can exhibit basic properties required for an interlayer film for a laminated glass such as penetration resistance.

The first resin layer and the second resin layer may be the same as or different from each other.

For improvement of the transparency of the resulting anisotropic heating sheet, the resin layer is preferably not a foamed body or a porous body. In other words, the resin layer is preferably a non-foamed body or a non-porous body.

Examples of the thermoplastic resin contained in the resin layer include polyvinylidene fluoride, polytetrafluoroethylene, vinylidene fluoride-propylene hexafluoride copolymers, polytrifluoroethylene, and acrylonitrile-butadiene-styrene copolymers. Examples also include polyesters, polyethers, polyamides, polycarbonates, polyacrylates, and polymethacrylates. Examples also include polyvinyl chloride, polyethylene, polypropylene, polystyrene, polyvinyl acetal, ethylene-vinyl acetate copolymers, polyoxymethylene (or polyacetal) resins, acetoacetal resins, polyvinyl benzyl acetal resins, polyvinyl cumine acetal resins, ionomer resins, and cycloolefins. In particular, the resin layer contains preferably a polyvinyl acetal or ethylene-vinyl acetate copolymer, more preferably a polyvinyl acetal.

The polyvinyl acetal is not particularly limited as long as it is obtainable by acetalization of polyvinyl alcohol with an aldehyde. Preferred is polyvinyl butyral. Two or more types of polyvinyl acetal may be used in combination as needed.

The lower limit of the degree of acetalization of the polyvinyl acetal is preferably 40 mol% and the upper limit thereof is preferably 85 mol%. The lower limit is more preferably 60 mol% and the upper limit is more preferably 75 mol%.

The lower limit of the hydroxy group content of the polyvinyl acetal is preferably 15 mol% and the upper limit thereof is preferably 40 mol%. With the hydroxy group content of 15 mol% or more, the adhesiveness between the interlayer film for a laminated glass and glass is improved. With the hydroxy group content of 40 mol% or less, the handleability of the interlayer film for a laminated glass is improved.

The degree of acetalization and the hydroxy group content can be measured in conformity with JIS K6728 "Testing methods for polyvinyl butyral".

The polyvinyl acetal can be prepared by acetalization of polyvinyl alcohol with an aldehyde.

The polyvinyl alcohol can be commonly prepared by saponification of polyvinyl acetate. Polyvinyl alcohol having a degree of saponification of 70 to 99.9 mol% is typically used. The degree of saponification of the polyvinyl alcohol is preferably 80 to 99.9 mol%.

The lower limit of the degree of polymerization of the polyvinyl alcohol is preferably 500 and the upper limit thereof is preferably 4,000. When the degree of polymerization of the polyvinyl alcohol is 500 or more, the laminated glass to be obtained has higher penetration resistance. When the degree of polymerization of the polyvinyl alcohol is 4,000 or less, formation of the interlayer film for a laminated glass is facilitated. The lower limit of the degree of polymerization of the polyvinyl alcohol is more preferably 1,000 and the upper limit thereof is more preferably 3,600.

The aldehyde is not particularly limited. Commonly, a C1-C10 aldehyde is suitably used. The C1-C10 aldehyde is not particularly limited, and examples thereof include n-butyraldehyde and isobutyraldehyde. Examples also include n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, polyvinyl benzylaldehyde, and polyvinyl cuminaldehyde. In particular, n-butyraldehyde, n-hexylaldehyde, and n-valeraldehyde are preferred, and n-butyraldehyde is more preferred. Each of these aldehydes may be used alone, or two or more thereof may be used in combination.

The resin layer preferably contains a plasticizer. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by a reaction between a glycol and a monobasic organic acid.

Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexylic acid, pelargonic acid (or n-nonylic acid), and decylic acid.

In particular, preferred are triethylene glycol dicaproic acid ester, triethylene glycol-di-2-ethylbutyric acid ester, triethylene glycol-di-n-octylic acid ester, and triethylene glycol-di-2-ethylhexylic acid ester.

The polybasic organic acid esters are not particularly limited, and examples thereof include ester compounds of a polybasic organic acid (e.g., adipic acid, sebacic acid, and azelaic acid) and a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, and triethylene glycol di-n-heptanoate. Examples also include tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, and 1,3-propylene glycol di-2-ethylbutyrate. Examples also include 1,4-butylene glycol di-2-ethylbutyrate, diethylene glycol di-2-ethylbutyrate, diethylene glycol di-2-ethylhexanoate, and dipropylene glycol di-2-ethylbutyrate. Examples also include triethylene glycol di-2-ethylpentanoate, tetraethylene glycol di-2-ethylbutyrate, and diethylene glycol dicaprylate. Examples also include dihexyl adipate, dioctyl adipate, hexylcyclohexyl adipate, diisononyl adipate, heptylnonyl adipate, dibutyl sebacate, and oil-modified sebacic alkyds. Examples further include mixtures of phosphoric acid esters and adipic acid esters, adipic acid esters, mixed type adipic acid esters prepared from C4-C9 alkyl alcohols and C4-C9 cyclic alcohols, and C6-C8 adipic acid esters such as hexyl adipate.

The organophosphate plasticizer is not particularly limited, and examples thereof include tributoxyethyl phosphate, isodecylphenyl phosphate, and triisopropyl phosphate.

For less hydrolysis, the plasticizer contains preferably triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate.

The amount of the plasticizer in the resin layer is not particularly limited. The lower limit thereof is preferably 10 parts by weight and the upper limit thereof is preferably 90 parts by weight based on 100 parts by weight of the polyvinyl acetal. When the amount of the plasticizer is 10 parts by weight or more, the interlayer film for a laminated glass has a low melt viscosity, improving the deaeration properties in the production of a laminated glass using the anisotropic heating sheet as an interlayer film for a laminated glass. When the amount of the plasticizer is 90 parts by weight or less, the transparency of the interlayer film for a laminated glass is improved. The lower limit of the amount of the plasticizer is more preferably 25 parts by weight and the upper limit thereof is more preferably 80 parts by weight, still more preferably 70 parts by weight.

When the amount of the plasticizer is 55 parts by weight or more, excellent sound insulation properties can be imparted to the resin layer.

The amount of the plasticizer in the first resin layer and the amount of the plasticizer in the second resin layer may be the same as or different from each other.

The resin layer preferably contains an adhesion modifier. The adhesion modifier contained adjusts the adhesion force to glass, resulting in production of a laminated glass excellent in penetration resistance.

The adhesion modifier used is suitably, for example, at least one selected from the group consisting of an alkali metal salt, an alkaline earth metal salt, and a magnesium salt. Examples of the adhesion modifier include salts of potassium, sodium, magnesium, and the like.

Examples of an acid constituting the salts include organic acids such as carboxylic acids (e.g., octylic acid, hexylic acid, 2-ethylbutyric acid, butyric acid, acetic acid, formic acid) and inorganic acids such as hydrochloric acid and nitric acid.

In the case where the anisotropic heating sheet of the present invention is required to have heat ray-absorbing properties, the resin layer may contain a heat-ray absorbent.

The heat-ray absorbent is not particularly limited as long as it can block infrared rays. Specifically, for example, preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The resin layer may contain conventionally known additives such as a UV blocking agent, an antioxidant, a light stabilizer, modified silicone oil as an adhesion modifier, a flame retardant, an antistatic agent, a moisture-proof agent, a heat-ray reflecting agent, a heat-ray absorbent, an anti-blocking agent, and a colorant containing a pigment or dye, as needed.

The thickness of the resin layer is not particularly limited. The lower limit thereof is preferably 10 µm and the upper limit thereof is preferably 3,500 µm. With the thickness of the resin layer within this range, sufficient durability can be achieved and the laminated glass to be obtained has satisfactory basic properties such as transparency and penetration resistance. The lower limit of the thickness of the resin layer is more preferably 100 µm and the upper limit thereof is more preferably 1,200 µm. The lower limit is still more preferably 200 µm and the upper limit is still more preferably 850 µm. The lower limit is particularly preferably 350 µm.

In the anisotropic heating sheet of the present invention, the aerogel layer has a tensile strain at break of 0.1% or higher as determined by a tensile test in conformity with JIS C 2151. With the tensile strain at break of 0.1% or higher, the anisotropic heating sheet of the present invention can have excellent flexibility and shock resistance, and can be bent along a curved surface or wound into a roll to improve the handleability. The tensile strain at break is preferably 0.2% or higher, more preferably 0.3% or higher, still more preferably 0.5% or higher, particularly preferably 1.0% or higher.

The tensile strain at break of the aerogel layer is preferably measured under the conditions of 23°C and a humidity of 30%. In the case where the aerogel layer yields in the tensile test, the nominal tensile strain at break is preferably measured.

Here, the tensile strain at break may be measured in conformity with JIS K 7127, as JIS C 2151 cites JIS K 7127 and teaches in the section of tensile properties that "the tensile properties are in accordance with JIS K 7127".

The present invention also encompasses a roll obtained by winding the anisotropic heating sheet of the present invention into a roll.

The tensile strain at break may be adjusted to 0.1% or higher by any method. An exemplary method is to use a polymer aerogel having excellent flexibility as the aerogel contained in the aerogel layer.

The anisotropic heating sheet of the present invention may be produced by any method. Suitable methods include a method including forming the heating layer on the aerogel layer by a method such as a sputtering method to provide a laminate, interposing the laminate between the first resin layer and the second resin layer, and thermally pressure bonding them. In particular, a what is called roll-to-roll method is preferred in which the layers are unwounded from rolls prepared by individually winding the layers and stacked to provide a laminate, the laminate is thermally pressure bonded by being passed between heated press rolls to provide an anisotropic heating sheet, and the anisotropic heating sheet is wound into a roll.

The anisotropic heating sheet of the present invention has the above structure and thus can emit heat generated from the heating layer to a specific direction to efficiently utilize its energy. Since the aerogel layer exhibits high heat insulation properties, and also since the heating layer has far-infrared ray-reflecting properties, the anisotropic heating sheet of the present invention has excellent heat insulation properties and far-infrared reflecting properties, and also can exhibit high heat-shielding properties. In addition, since the aerogel layer has high sound insulating properties, the anisotropic heating sheet of the present invention can also exhibit high sound insulation properties.

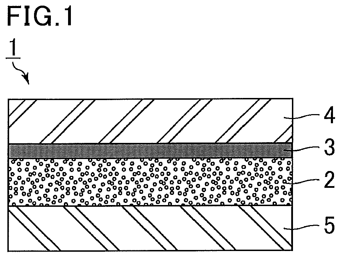

Fig. 1 is a schematic view showing an exemplary cross section in the thickness direction of the anisotropic heating sheet of the present invention.

In Fig. 1, an anisotropic heating sheet 1 includes a laminate including an aerogel layer 2 and a heating layer 3 stacked on one surface of the aerogel layer 2. A first resin layer 4 is stacked on the heating layer 3 side of the laminate and a second resin layer 5 is stacked on the aerogel layer 2 side.

In the anisotropic heating sheet 1 in Fig. 1, heat generated from the heating layer 3 under application of a voltage is blocked by the aerogel layer 2, so that the heat is less likely to be emitted to the second resin layer 5 side and mainly emitted to the first resin layer 4 side.

The anisotropic heating sheet of the present invention can be used alone in applications such as wet suits and space suits with a heating function, snow-melting sheets, condensation prevention sheets, heating sheets for attaching to glass, heat retention cooking utensils (e.g., pot cozies), and heat insulating material for water tanks.

The anisotropic heating sheet of the present invention can exhibit particularly high anisotropic heating properties when a laminated glass is produced using the anisotropic heating sheet as an interlayer film for a laminated glass. This is presumably attributed to the following reasons: in production of a laminated glass using the anisotropic heating sheet of the present invention as an interlayer film for a laminated glass, the high-temperature, high-pressure conditions in an autoclave step allow more solvent in the aerogel than usual to evaporate, resulting in an aerogel having more voids; and the aerogel, as used in a laminated glass, is less likely to absorb moisture, so that the aerogel can maintain the state with more voids to be particularly less likely to conduct heat, thus improving heat insulation properties.

The present invention also encompasses an interlayer film for a laminated glass including the anisotropic heating sheet of the present invention.

The interlayer film for a laminated glass of the present invention may have a wedge-shaped cross section. In the case where the interlayer film for a laminated glass has a wedge-shaped cross section, adjustment of the wedge angle θ of the wedge shape according to the mounting angle of the laminated glass can prevent occurrence of double images or ghost images in a head-up display which allows the driver to see the front visual field and the meter image at the same time without turning the driver's eyes downward. For further preventing occurrence of double images, the lower limit of the wedge angle θ is preferably 0.1 mrad, more preferably 0.2 mrad, still more preferably 0.3 mrad and the upper limit is preferably 1 mrad, more preferably 0.9 mrad.

The wedge shape herein includes the shape of an interlayer film for a laminated glass having a wedge-shaped cross section produced by extrusion-molding a resin composition using an extruder. Specifically, the wedge shape may have its minimum thickness in a region slightly inward from one end on the thinner side (specifically, a region spaced inward from one end on the thinner side by a distance of 0X to 0.2X where X is the distance between the one end and the other end). The wedge shape may also have its maximum thickness in a region slightly inward from one end on the thicker side (specifically, a region spaced inward from one end on the thicker side by a distance of 0X to 0.2X where X is the distance between the one end and the other end). The wedge shape as used herein includes such a shape. The distance X between the one end and the other end of the interlayer film for a laminated glass is preferably 3 m or shorter, more preferably 2 m or shorter, particularly preferably 1.5 m or shorter and is preferably 0.5 m or longer, more preferably 0.8 m or longer, particularly preferably 1 m or longer.

In the case where the interlayer film for a laminated glass of the present invention has a wedge-shaped cross section, for example, the cross-sectional shape of the entire interlayer film for a laminated glass can be controlled to have a wedge shape with a certain wedge angle by controlling the shape of the first resin layer and/or the second resin layer while keeping the thicknesses of the aerogel layer and the heating layer each within a certain range.

The present invention also encompasses a laminated glass including a pair of glass plates and the interlayer film for a laminated glass of the present invention interposed between the pair of glass plates.

The glass plates may be commonly used transparent glass plates. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. A UV-blocking glass plate having a UV-blocking layer on a glass surface may also be used. Other examples of the glass plates include organic plastic plates made of polyethylene terephthalate, polycarbonate, polyacrylate, or the like.

The glass plates may include two or more types of glass plates. For example, the laminated glass may be a laminated glass including the interlayer film for a laminated glass of the present invention between a transparent float glass plate and a colored glass plate such as a green glass plate. The glass plates may include two or more glass plates with different thicknesses.

The laminated glass of the present invention may be produced by any method, and may be produced by a conventionally known method. Specifically, for example, a laminate including at least two glass plates and an interlayer film for a laminated glass interposed between the two glass plates is passed through nip rolls to be squeezed (squeeze deaeration) or put in a rubber bag and vacuum suctioned (vacuum deaeration) to be pressure-bonded while the air remaining between the glass plates and the interlayer film is removed. The resulting laminate is pressurized with heat, for example, in an autoclave to be pressure-bonded.

The present invention also encompasses a laminated glass system including the laminated glass of the present invention and a voltage supply part for applying a voltage to the heating layer in the interlayer film for a laminated glass in the laminated glass.

### - Advantageous Effects of Invention

The present invention can provide an anisotropic heating sheet which is capable of emitting generated heat in a specific direction to efficiently utilize its energy, and which has excellent handleability. The present invention also can provide an interlayer film for a laminated glass and a laminated glass each including the anisotropic heating sheet.

### BRIEF DESCRIPTION OF DRAWINGS

Fig. 1 is a schematic view showing an exemplary cross section in the thickness direction of the anisotropic heating sheet of the present invention.

### DESCRIPTION OF EMBODIMENTS

Embodiments of the present invention are specifically described in the following with reference to, but not limited to, examples.

### (Example 1)

### (1) Preparation of aerogel layer

TEMPO-oxidized cellulose nanofibers were dispersed in pure water to prepare a 0.9% by weight dispersion of the TEMPO-oxidized cellulose nanofibers. To 20 mL of the dispersion was dripped 10 mL of 0.1 M hydrochloric acid. The dispersion was then left to stand at room temperature for one hour to give a hydrogel. The obtained hydrogel was freeze-dried to give a 250-µm-thick aerogel layer containing a polymer aerogel containing cellulose nanofibers.

The obtained polymer aerogel containing cellulose nanofibers had a tensile strain at break of 1.2% as determined by a tensile test under the conditions of a temperature of 23°C and a humidity of 30% in conformity with JIS C 2151.

### (2) Preparation of heating layer

On the obtained aerogel layer was formed a 20-nm-thick heating layer containing silver by sputtering under the conditions of a sputtering power of a 1,000 W direct current (DC), an atmospheric gas of argon, a gas flow rate of 50 sccm, and a sputtering pressure of 0.5 Pa.

The obtained heating layer had a surface resistivity of 3.3 Ω/□.

### (3) Preparation of resin layer

To 100 parts by weight of polyvinyl butyral were added 40 parts by weight of a plasticizer, 0.5 parts by weight of a UV blocking agent, and 0.5 parts by weight of an antioxidant. They were sufficiently kneaded with a mixing roll to prepare a composition. The obtained composition was extruded from an extruder to give a single-layer resin layer having a thickness of 380 µm.

The polyvinyl butyral had a hydroxy group content of 30 mol%, a degree of acetylation of 1 mol%, a degree of butyralization of 69 mol%, and an average degree of polymerization of 1,700. The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin 326" available from BASF SE). The antioxidant used was 2,6-dit-butyl-p-cresol (BHT).

### (4) Production of anisotropic heating sheet

Two sheets of the obtained resin layer were provided, and the aerogel layer on which the heating layer was formed was interposed between the two sheets. The laminate was thermally pressure bonded to produce an anisotropic heating sheet having a laminated structure (first resin layer/heating layer/aerogel layer/second resin layer). The thermal pressure bonding was performed by a roll-to-roll method using a thermal pressure bonding laminator ("MRK-650Y type" available from MCK Co., Ltd.) under the conditions of a heating temperature of 90°C, a linear pressure in pressure bonding of 0.05 kN, and a feed tension of 20 N. The laminating rolls used for the thermal pressure bonding had upper and lower rolls both formed of rubber.

### (5) Production of laminated glass

The obtained anisotropic heating sheet was cut into a size of 120 mm in length x 100 mm in width. The cut anisotropic heating sheet as an interlayer film for a laminated glass was interposed between two clear glass plates (100 mm in length × 100 mm in width × 2.5 mm in thickness) to give a laminate. Here, the cut anisotropic heating sheet was interposed such that it protruded from the ends of the clear glass plates by 10 mm in length respectively. The obtained laminate was put in a rubber bag and the pressure inside the rubber bag was reduced to 0.1 MPa. The laminate was then held at 90°C for five minutes to be temporarily pressure-bonded while the air remaining between the glass plates and the interlayer film was removed. Subsequently, the temporarily pressure-bonded laminate was pressure-bonded in an autoclave for 20 minutes under the conditions of 150°C and a pressure of 1.01 MPa. Thus, a laminated glass was produced. Thereafter, the resin layer was cut off from the anisotropic heating sheet protruding from the glass plates to expose the heating layer. Single-sided copper foil tape STS-CU42S (available from Sekisui Techno Shoji Nishi Nihon Co., Ltd.) was attached as an electrode such that the heating layer contacted the copper foil of the copper foil tape. The copper foil tape was further fixed by attaching a binder clip thereto.

### (Example 2)

TEMPO-oxidized cellulose nanofibers were dispersed in pure water to prepare a 0.6% by weight dispersion of the TEMPO-oxidized cellulose nanofibers. To 20 mL of the dispersion was dripped 10 mL of 0.1 M hydrochloric acid. The dispersion was then left to stand at room temperature for one hour to give a hydrogel. The obtained hydrogel was freeze-fried to give a 250-µm-thick aerogel layer containing a polymer aerogel containing cellulose nanofibers. The obtained aerogel layer had a tensile strain at break of 1.0%.

An anisotropic heating sheet and a laminated glass were obtained as in Example 1 except that the obtained aerogel layer was used.

### (Example 3)

An amount of 1 g of Chitosan 10 (available from Wako Pure Chemical Industries, Ltd.) was dissolved in 50 mL of a 2% by volume aqueous acetic acid solution to prepare a chitosan solution. The chitosan solution was diluted in ultrapure water to a 10 g/L solution. To the 10 g/L aqueous chitosan solution was added 1.5 mL of a 9% by weight aqueous butyraldehyde solution. The solution was transferred into a petri dish. The petri dish was sealed and left to stand at 60°C for 12 hours to prepare a hydrogel. After slow cooling at room temperature, the hydrogel was washed by repeating five-hour immersion in ultrapure water five times, and washed by immersion in methanol at a frequency of three times/day for three days. The obtained gel was dried at room temperature to give a 250-µm-thick aerogel layer containing a polymer aerogel containing chitosan.

An anisotropic heating sheet and a laminated glass were obtained as in Example 1 except that the obtained aerogel layer was used.

The obtained aerogel layer had a tensile strain at break of 1.0%.

### (Example 4)

A 3,000-µm-thick aerogel layer was obtained as in Example 3 except that in preparation of the aerogel layer, the method for drying the aerogel was changed from drying at room temperature to supercritical drying with carbon dioxide.

A heat insulation sheet and a laminated glass were obtained as in Example 1 except that the obtained aerogel layer was used.

The obtained aerogel layer had a tensile strain at break of 1.2%.

### (Example 5)

An amount of 2 g of Chitosan 10 (available from Wako Pure Chemical Industries, Ltd.) was dissolved in 100 mL of a 2% by volume aqueous acetic acid solution to prepare a chitosan solution. The chitosan solution was diluted in ultrapure water to a 10 g/L solution. To the 10 g/L aqueous chitosan solution was added 3.0 mL of a 9% by weight aqueous butyraldehyde solution. The solution was transferred into a petri dish. The petri dish was sealed and left to stand at 60°C for 12 hours to prepare a hydrogel. After slow cooling at room temperature, the hydrogel was washed by repeating five-hour immersion in ultrapure water five times, and washed by immersion in methanol at a frequency of three times/day for three days. The obtained gel was dried by supercritical drying with carbon dioxide to give a 7,000-µm-thick aerogel layer containing a polymer aerogel containing chitosan.

A heat insulation sheet and a laminated glass were obtained as in Example 1 except that the obtained aerogel layer was used.

The obtained aerogel layer had a tensile strain at break of 1.5%.

### (Example 6)

A 2,000-µm-thick aerogel layer was obtained as in Example 3 except that in preparation of the aerogel layer, the method for drying the aerogel was changed from drying at room temperature to supercritical drying with carbon dioxide.

A heat insulation sheet and a laminated glass were obtained as in Example 1 except that the obtained aerogel layer was used, and an ethylene-vinyl acetate copolymer resin (EVA, vinyl acetate content 30% by mass) was used as the resin constituting the resin layers instead of polyvinyl butyral.

The obtained aerogel layer had a tensile strain at break of 1.0%.

### (Example 7)

A 1,000-µm-thick aerogel layer was obtained as in Example 3 except that in preparation of the aerogel layer, the method for drying the aerogel was supercritical drying with carbon dioxide.

A heat insulation sheet and a laminated glass were obtained as in Example 3 except that the obtained aerogel layer was used, and the first resin layer and the second resin layer each had a thickness of 800 µm.

The obtained aerogel layer had a tensile strain at break of 1.0%.

### (Example 8)

In 50 g of a 0.01 M acetic acid solution were dissolved 2.5 g of urea and 2.5 g of a surfactant (hexadecyltrimethylammonium bromide). With stirring at room temperature, 5.0 g of pentaerythritol was dissolved in the solution. Then, 20.0 mL of silica alkoxide (methyltrimethoxysilane: MTMS) was added. To allow hydrolysis to proceed, stirring was continued for 30 minutes. The height of the stirred liquid was adjusted such that the dried gel had a thickness of 2.0 mm. Thereafter, the solution was left to stand in a 60°C thermostat and allowed to gel for 96 hours under sealed conditions. The gel was then washed with methanol at a frequency of three times/day for at least three days to remove unreacted matter and the surfactant. The gel was dried by supercritical drying to give a 2,000-µm-thick aerogel layer (organic-inorganic hybrid silica aerogel A layer).

An anisotropic heating sheet and a laminated glass were obtained as in Example 1 except that the obtained aerogel layer was used. When the obtained anisotropic heating sheet was cut into a size of 120 mm in length × 100 mm in width, the aerogel layer was sanded to a size of 120 mm in length × 100 mm in width to avoid breaking the aerogel layer.

The obtained aerogel layer had a tensile strain at break of 0.20%.

### (Example 9)

In 50 g of a 0.01 M acetic acid solution were dissolved 2.5 g of urea and 5.0 g of a surfactant (hexadecyltrimethylammonium bromide). With stirring at room temperature, 20.0 mL of silica alkoxide (methyltrimethoxysilane: MTMS) and 5.0 mL of diethylene glycol were added. To allow hydrolysis to proceed, stirring was continued for 30 minutes. The height of the stirred liquid was adjusted such that the dried gel had a thickness of 2.0 mm. Thereafter, the solution was left to stand in a 60°C thermostat and allowed to gel for 96 hours under sealed conditions. The gel was then washed with methanol at a frequency of three times/day for at least three days to remove unreacted matter and the surfactant. The gel was dried by supercritical drying to give a 2,000-µm-thick aerogel layer (organic-inorganic hybrid silica aerogel B layer).

A heat insulation sheet and a laminated glass were obtained as in Example 1 except that the obtained aerogel layer was used. When the obtained anisotropic heating sheet was cut into a size of 120 mm in length × 100 mm in width, the aerogel layer was sanded to a size of 120 mm in length × 100 mm in width to avoid breaking the aerogel layer.

The obtained aerogel layer had a tensile strain at break of 0.30%.

### (Comparative Example 1)

A polyethylene terephthalate (PET) film having a thickness of 250 µm (available from Toyobo Co., Ltd., COSMOSHINE A4300) was used as a substrate. On the substrate was formed a 20-nm-thick heating layer containing silver by sputtering with use of silver as a target under the conditions of a sputtering power of a 1,000 W direct current (DC), an atmospheric gas of argon, a gas flow rate of 50 sccm, and a sputtering pressure of 0.5 Pa.

The obtained heating layer had a surface resistivity of 3.3 Ω/□.

Two sheets of a resin layer were prepared as in Example 1, and the substrate on which the heating layer was formed was interposed between the two sheets. The laminate was thermally pressure bonded to produce a heating sheet having a laminated structure (first resin layer/heating layer/substrate/second resin layer). The thermal pressure bonding was performed by a roll-to-roll method using a thermal pressure bonding laminator ("MRK-650Y type" available from MCK Co., Ltd.) under the conditions of a heating temperature of 90°C and a linear pressure in pressure bonding of 0.05 kN. Laminating rolls used for the thermal pressure bonding had upper and lower rolls both formed of rubber.

The obtained anisotropic heating sheet was cut into a size of 120 mm in length × 100 mm in width. The cut anisotropic heating sheet as an interlayer film for a laminated glass was interposed between two clear glass plates (100 mm in length × 100 mm in width × 2.5 mm in thickness) to give a laminate. Here, the cut anisotropic heating sheet was interposed such that it protruded from the ends of the clear glass plates by 10 mm in length respectively. The obtained laminate was put in a rubber bag and the pressure inside the bag was reduced to 0.1 MPa. Then, the laminate was held at 90°C for five minutes to be temporarily pressure-bonded while the air remaining between the glass plates and the interlayer film was removed. Subsequently, the temporarily pressure-bonded laminate was pressure-bonded in an autoclave for 20 minutes under the conditions of 150°C and a pressure of 1.01 MPa. Thus, a laminated glass was produced. Thereafter, the resin layer was cut off from the anisotropic heating sheet protruding from the glass plates to expose the heating layer. Single-sided copper foil tape STS-CU42S (available from Sekisui Techno Shoji Nishi Nihon Co., Ltd.) was attached as an electrode such that the heating layer contacted the copper foil of the copper foil tape. The copper foil tape was further fixed by attaching a binder clip thereto.

### (Comparative Example 2)

In 50 g of a 0.01 M acetic acid solution were dissolved 2.5 g of urea and 5.0 g of a surfactant (hexadecyltrimethylammonium bromide). With stirring at room temperature, 25.0 mL of silica alkoxide (methyltrimethoxysilane: MTMS) was added. To allow hydrolysis to proceed, stirring was continued for 30 minutes. Thereafter, the solution was left to stand in a 60°C thermostat and allowed to gel for 96 hours under sealed conditions. At this time, the height of the stirred liquid was adjusted such that the dried gel had a thickness of 2 mm. The gel was then washed with methanol at a frequency of three times/day for at least three days to remove unreacted matter and the surfactant. The gel was dried by supercritical drying to give a 2,000-µm-thick aerogel layer (inorganic silica aerogel layer).

A heat insulation sheet and a laminated glass were obtained as in Example 1 except that the obtained aerogel layer was used. When the obtained anisotropic heating sheet was cut into a size of 120 mm in length × 100 mm in width, the silica gel was sanded to a size of 120 mm in length × 100 mm in width to avoid breaking the silica gel.

The obtained aerogel layer had a tensile strain at break of 0.08%.

### (Evaluation)

The anisotropic heating sheets and laminated glasses obtained in the examples and comparative examples were evaluated by the following methods.

Tables 1 and 2 show the results.

### (1) Evaluation of handleability of anisotropic heating sheet

Each of the anisotropic heating sheets obtained in the examples and comparative examples was cut into a size of 3 cm in width and 30 cm in length to prepare a specimen. The obtained specimen was put on a horizontal table. The specimen was warped such that an angle of 30° was formed by the table and a straight line connecting the center in the thickness direction of one longitudinal end of the specimen and the center in the thickness direction of the other longitudinal end. The handleability was evaluated from the state of the anisotropic heating sheet at this time according to the following criteria.
○○ (Excellent): Neither the surface layers nor the aerogel broke, and no wrinkles or fold marks were formed.
○ (Good): Neither the surface layers nor the aerogel broke, but wrinkles or fold marks were formed.
Δ (Fair): Only the aerogel broke.
× (Poor): The surface layer and the aerogel broke.

### (2) Evaluation of anisotropic heating properties

An alligator cable was attached to the electrode of each of the laminated glasses obtained in the examples and comparative examples. A thermocouple was attached, with adhesive tape, to the center of the glass surface on the first resin layer side and the center of the glass surface on the second resin layer side. The laminated glass in this state was left to stand in a low temperature chamber (available from Espec Corp." PU-2J") kept at -18°C ± 2°C for 12 hours, and the glass surface temperature was recorded with a data logger (available from Keyence Corporation, "NR-1000").

The alligator cable was connected to a DC power supply PWR800L (available from Kikusui Electronics Corp.). A voltage of 14 V was applied to measure the time t1 required for the temperature of the glass surface on the first resin layer side to reach 0°C and the time t2 required for the temperature of the glass surface on the second resin layer side to reach 0°C. In the laminated glass of Comparative Example 1, t1 was 600 seconds and t2 was 605 seconds. In the laminated glasses of the examples produced using the aerogel-containing anisotropic heating sheets, t1 was shorter and t2 was longer than in Comparative Example 1. This shows that the laminated glasses had anisotropic heating properties.

In the laminated glasses of the examples, when the temperature of the glass surface on the second resin layer side was unlikely to reach 0°C, energization was terminated when a sufficient time passed after the lapse of t2 of the laminated glass of Comparative Example 1, and t2 was determined to be longer than t2 of Comparative Example 1.

**[Table 1]**

| | | | Example 1 | Example 2 | Example 3 | Example 4 | Example 5 | Example 6 |
|---|---|---|---|---|---|---|---|---|
| Sheet Structure | First resin layer | Type | PVB | PVB | PVB | PVB | PVB | EVA |
| | | Thickness (*µ* m) | 380 | 380 | 380 | 380 | 380 | 380 |
| | Heating layer | Type | Ag | Ag | Ag | Ag | Ag | Ag |
| | | Surface resistance value (Ω/□) | 3.3 | 3.3 | 3.3 | 3.3 | 3.3 | 3.3 |
| | Aerogel layer | Type | Cellulose nanofibers | Cellulose nanofibers | Chitosan | Chitosan | Chitosan | Chitosan |
| | | Thickness (*µ*m) | 250 | 250 | 250 | 3000 | 7000 | 2000 |
| | Second resin layer | Type | PVB | PVB | PVB | PVB | PVB | EVA |
| | | Thickness (*µ*m) | 380 | 380 | 380 | 380 | 380 | 380 |
| Tensile strain at break of aerogel layer (%) | | | 1.2 | 1.0 | 1.0 | 1.2 | 1.5 | 1.0 |
| Evaluation | Sheet handleability | | ○○ | ○○ | ○○ | ○○ | ○ | ○○ |
| | Anisotropic heating properties of laminated glass | | Present | Present | Present | Present | Present | Present |

**[Table 2]**

| | | | Example 7 | Example 8 | Example 9 | Comparative Example 1 | Comparative Example 2 |
|---|---|---|---|---|---|---|---|
| Sheet structure | First resin layer | Type | PVB | PVB | PVB | PVB | PVB |
| | | Thickness (*µ*m) | 800 | 800 | 800 | 380 | 380 |
| | Heating layer | Type | Ag | Ag | Ag | Ag | Ag |
| | | Surface resistance value (Ω/□) | 3.3 | 3.3 | 3.3 | 3.3 | 3.3 |
| | Aerogel layer | Type | Chitosan | Organic inorganic silica A | Organic inorganic silica B | (Polyethylene terephthalate) | Inorganic silica |
| | | Thickness (*µ*m) | 1000 | 2000 | 2000 | 250 | 2000 |
| | Second resin layer | Type | PVB | PVB | PVB | PVB | PVB |
| | | Thickness (*µ*m) | 800 | 800 | 800 | 380 | 380 |
| Tensile strain at break of aerogel layer (%) | | | 1.0 | 0.20 | 0.30 | - | 0.08 |
| Evaluation | Sheet handleability | | ○○ | ○ | ○ | ○○ | Δ |
| | Anisotropic heating properties of laminated glass | | Present | Present | Present | - | Present |

### INDUSTRIAL APPLICABILITY

The present invention can provide an anisotropic heating sheet which is capable of emitting generated heat in a specific direction to efficiently utilize its energy, and which has excellent handleability. The present invention also can provide an interlayer film for a laminated glass and a laminated glass each including the anisotropic heating sheet.

### REFERENCE SIGNS LIST

- 1: anisotropic heating sheet
- 2: aerogel layer
- 3: heating layer
- 4: first resin layer
- 5: second resin layer

## Claims

1. An anisotropic heating sheet comprising:
a laminate including an aerogel layer containing an aerogel and a heating layer,
the aerogel layer having a tensile strain at break of 0.1% or higher as determined by a tensile test in conformity with JIS C 2151.

2. The anisotropic heating sheet according to claim 1,
wherein the aerogel is a polymer aerogel.

3. The anisotropic heating sheet according to claim 2,
wherein the polymer aerogel contains at least one organic polymer material selected from the group consisting of resorcinol-formalin resins, cellulose nanofibers, polyimides, polyurethanes, and epoxy resins.

4. The anisotropic heating sheet according to claim 1, 2, or 3,
wherein the aerogel layer has a thickness of 10 µm or more and 3 mm or less.

5. The anisotropic heating sheet according to claim 1, 2, 3, or 4,
wherein the aerogel layer has a tensile strain at break of 0.3% or higher.

6. The anisotropic heating sheet according to claim 1, 2, 3, 4, or 5, comprising a resin layer containing a thermoplastic resin on one or both surfaces of the laminate.

7. The anisotropic heating sheet according to claim 6,
wherein the thermoplastic resin is a polyvinyl acetal or an ethylene-vinyl acetate copolymer.

8. An interlayer film for a laminated glass, the interlayer film comprising:
the anisotropic heating sheet according to claim 1, 2, 3, 4, 5, 6, or 7.

9. A laminated glass comprising:
a pair of glass plates; and
the interlayer film for a laminated glass according to claim 7 interposed between the pair of glass plates.
